# DEMANDE DE BREVET EUROPEEN

(11) **EP 4 016 427 A1**
(43) Date de publication de la demande: **22.06.2022**
(21) Numéro de dépôt: 20306639.4
(22) Date de dépôt: 21.12.2020
(51) Int. Cl.: G06Q 20/22, G06Q 20/36, G06Q 20/38, G06Q 20/40, G06Q 30/02

(54) **PROCEDE POUR LA CREATION D'UN INSTRUMENT DE PAIEMENT AU PROFIT D'UN TIERS BENEFICIAIRE**

(71) Demandeur: Thales Dis France SAS, 92190 Meudon (FR)
(72) Inventeur: LENGELLÉ, Denis, 13881 Gémenos Cedex (FR); ZENOU, Fréderic, 13881 Gémenos Cedex (FR); DAO, Frederic, 13881 Gémenos Cedex (FR)
(74) Mandataire: Milharo, Emilien

(57) **Abrégé**

L'invention concerne un procédé pour la création d'un instrument de paiement au profit d'un tiers bénéficiaire, ledit procédé comprenant les étapes suivantes :
- demande (1) de création d'un instrument de paiement digital (25) auprès d'un serveur bancaire (24) d'un titulaire (T) de compte bancaire (PAN, 27) ou de carte bancaire, à l'aide d'une première application bancaire (22) d'un dispositif de communication (21) du titulaire (T),
- transmission (5) à un dispositif de communication (31) du bénéficiaire (B) comprenant une seconde application bancaire (32), par ledit serveur bancaire (24), de données (28) d'enrôlement, lesdites données d'enrôlement comprenant un identifiant de ladite carte bancaire (PAN, 27) et un certificat d'authentification (29) des données d'enrôlement;
- enrôlement du bénéficiaire (B) auprès d'un serveur d'enrôlement et/ou de jeton (TR, TR/TSP, 34) en communicant lesdites données d'enrôlement à l'aide d'un second dispositif de communication (31), ledit serveur d'enrôlement et/ou de jeton (TR, TR/TSP) étant configuré pour générer à partir desdites données d'enrôlement, un jeton sécurisé de transaction (25) ou le requérir auprès du serveur (TR, 44) de jeton sécurisé ;
- provisionnement du jeton sécurisé (25), dans ledit second dispositif de communication du bénéficiaire,
caractérisé en ce que le bénéficiaire (B) est un tiers distinct du titulaire (T) de compte avec un second dispositif de communication (31) distinct de celui (21) du titulaire de compte, et en ce que ladite requête (1) de création de l'instrument de paiement (25) comprend une communication d'au moins une adresse (26) de contact dudit bénéficiaire (B).

## Description

### Domaine de l'invention.

L'invention concerne un procédé pour la création d'un instrument de paiement au profit d'un tiers bénéficiaire.

Elle concerne en particulier le domaine des cartes de paiement digitales, des cartes cadeaux.

L'invention concerne un nouveau service pour digitaliser des cartes de paiement.

### Objectif.

Aujourd'hui, les inventeurs se sont posés la question de savoir comment un émetteur, initiateur, demandeur ou donateur pourrait transmettre aisément et rapidement un élément, instrument ou moyen de paiement à quelqu'un qui n'est pas physiquement joignable mais qui possède dispositif de communication et un réseau de communication (ex. un téléphone mobile et une connexion internet...) .

### Art antérieur

On connait les cartes cadeaux qu'un émetteur, initiateur, demandeur ou donateur peut acheter et l'envoyer ou les donner physiquement à un receveur. Cependant, les inconvénients de la carte cadeau sont le temps requis pour faire les opérations ci-dessus, des limites quant au nombre de marchands acceptant la carte cadeau, des limites dans son utilisation, une perte possible ou une utilisation partielle de la carte cadeau et par conséquent une perte d'argent pour le donateur.

Par ailleurs, un transfert d'argent de compte à compte bancaire n'est pas instantané, et un enfant (le récepteur)) peut ne pas avoir de compte et avoir simplement un téléphone portable ou un objet connecté ;

Le recours au don en espèce, exclut d'avoir un récepteur distant, le chèque de voyage, western union exige de se déplacer pour recevoir le don donc ce n'est pas instantané ;

On connait le principe de la digitalisation de cartes de paiement de l'émetteur de carte (banque) dans un mobile du récepteur (Banque HCE ou Apple pay, Samsung pay...) . Cependant, les principaux inconvénients sont, (1) le compte de paiement est toujours celui du demandeur et il n'y a pas de limitation dans le montant ; (2) Pendant l'opération de digitalisation, il y a généralement un mécanisme OTP qui implique le téléphone du demandeur pendant l'opération

Les cartes cadeaux digitales sont utilisées par des sites marchands en ligne sur internet. Toutefois, elles doivent être achetées par le donateur. De l'argent peut être perdu si la carte n'est pas utilisée. Le schéma mis en œuvre n'est pas lié au compte bancaire du titulaire.

On connait également le principe de la « tokenisation » consistant à remplacer des données sensibles (bancaires, santé, identification, d'accès) par des données moins sensibles sécurisées et jetables dénommées "jeton" (token en langage anglo-saxon).

Dans le domaine des transactions de paiement sur Internet, la « tokenisation » peut être utilisée pour la sécurisation de données de paiement (PAN, date d'expiration,...),

En monétique ou domaine de sécurisation de données informatiques, la « tokenisation » désigne un procédé consistant à remplacer des données bancaires (numéro de cartes, ...) confidentielles ou sensibles par des données jetables appelées "jeton" (token en anglais). Cette solution permet de rassurer le porteur, notamment en paiement sur Internet ou en NFC.

Ce principe de sécurisation des données consiste à séparer l'information du code token qui la recouvre. Pour présenter un niveau de sécurité satisfaisant, un token doit être irréversible et généré de manière aléatoire.

Un calcul du token peut s'effectuer à partir d'aléas calculés par un logiciel ou par des dispositifs cryptographiques. La restitution de la donnée originale est désignée par « dé-tokenisation » et n'est autorisée qu'au cours de procédés clairement identifiés et limitée à certaines applications, procédés ou utilisateurs.

La tokenisation permet de sécuriser les données sensibles de transactions, réduire l'exposition des données sensibles à des risques de fraudes.

Une fois tokenisées, les données critiques sont réputées désensibilisées et peuvent être mémorisées ou traitées sans risques. En cas de fraude, ces tokens ne peuvent pas être utilisés dans un système qui n'aurait pas accès à la détokenisation (cas d'un système ouvert interopérant comme un système utilisant des tokens au standard EMVCo).

Concernant le domaine des paiements, la génération de tokens de paiement est le processus connu similaire qui consiste aussi à remplacer le numéro de carte bancaire traditionnel par un identifiant numérique unique pour les transactions en ligne, sur mobile et sur appareils connectés.

Il existe un standard EMVCo dans le domaine bancaire, pour définir un système ouvert et interopérant pour la génération (tokenisation) et l'utilisation des « tokens ». EMVco en tant qu'organisme mondial de standardisation supervise les spécifications EMV (Visa, MasterCard et American Express).

En octobre 2013, Visa, MasterCard et American Express ont proposé une nouvelle norme pour les paiements numériques. EMVCo (l'organisme mondial de standardisation qui supervise les spécifications EMV afin d'assurer l'interopérabilité et l'acceptation) a depuis capitalisé sur ce cadre à l'aide des informations fournies par les membres d'EMVCo et du secteur afin d'améliorer la disponibilité et l'adoption des tokens à travers le monde. EMVCo a étendu son champ d'action pour développer des spécifications de génération des tokens et a publié la version initiale de cette spécification en mars 2014.

Le document US10380596 (B1) décrit des étapes de réception d'une demande de création d'un jeton cadeau représentatif d'un destinataire du cadeau et des limitations du cadeau d'un premier dispositif informatique. Le procédé comprend également une étape de génération d'un PAN symbolique associé à un compte cadeau et la transmission du PAN symbolique et des limitations de cadeau à un second appareil informatique.

Le procédé comprend la détection d'une demande d'autorisation de transaction représentative d'une tentative de transaction sur un périphérique POS marchand basée sur la surveillance des données d'autorisation de transaction provenant d'une pluralité d'appareils POS marchands.

### Problème technique / Objectifs.

L'invention vise à résoudre les inconvénients ou objectifs précités.

L'objectif de l'invention est de proposer une digitalisation d'une carte (ou autre instrument de paiement, pouvant être par exemple un token HCE ou un token stocké dans un portefeuille digital (digital wallet en anglais) dans un dispositif communicant) pour un bénéficiaire (ou receveur) de cadeau (par exemple, une personne qui veut faire un cadeau pécunier à son enfant, ou un ami).

### Résumé de l'invention.

L'invention propose un service de carte digitalisée qui permet d'utiliser le compte bancaire de l'initiateur (le donateur ou émetteur ou demandeur) du cadeau pécunier (ou d'un droit de paiement).

L'invention peut consister, selon un mode préféré de réalisation, à faire générer un instrument de paiement sous forme de tokens (jeton sécurisé ou certificat électronique de données sensibles), au profit de tiers, en utilisant les données de paiement bancaire d'un titulaire de compte bancaire.

Avantageusement, l'invention peut faire usage d'une infrastructure existante, fonctionnant selon des schémas standardisés de « tokenisation » pour la génération et d'utilisation de « tokens ».

A cet effet, l'invention a pour objet un procédé pour la création d'un instrument de paiement au profit d'un tiers bénéficiaire, ledit procédé comprenant les étapes suivantes:
- demande ou requête de création d'un instrument de paiement digital auprès d'un serveur bancaire d'un titulaire de compte bancaire ou de carte bancaire, à l'aide d'une première application bancaire d'un dispositif de communication du titulaire,
- transmission à un dispositif de communication du bénéficiaire comprenant une seconde application bancaire, par ledit serveur bancaire, de données d'enrôlement, lesdites données d'enrôlement comprenant un identifiant de ladite carte bancaire et un certificat d'authentification des données d'enrôlement;
- enrôlement du bénéficiaire (B) auprès d'un serveur d'enrôlement et /ou serveur de jeton sécurisé, en communicant lesdites données d'enrôlement à l'aide d'un second dispositif de communication, ledit serveur d'enrôlement et/ou serveur de jeton étant configuré pour générer à partir desdites données d'enrôlement, un jeton sécurisé de transaction ou le requérir auprès du serveur de jeton ;
- provisionnement du jeton sécurisé, dans ledit second dispositif de communication du bénéficiaire ;

Le procédé se distingue en ce que le bénéficiaire est un tiers distinct du titulaire de compte avec un second dispositif de communication distinct de celui du titulaire de compte, et en ce que ladite requête de création de l'instrument de paiement comprend une communication d'au moins une adresse de contact dudit bénéficiaire.

Ainsi, l'invention a l'avantage de permettre à toute banque de gérer elle-même la tokenisation de manière autonome. Et, d'un point de vue des spécifications EMVco, cette gestion est totalement transparente.

L'invention a aussi l'avantage de reposer sur un écosystème définit par le standard EMVCo concernant la tokenisation. La gestion du token peut être, de préférence, effectuée par un serveur TSP (=Token Service Provider) dans un cadre régi et maintenu par les spécifications EMVco et non les banques. L'invention peut donc s'appliquer de-facto à plusieurs banques qui adopteraient le procédé de l'invention tout en étant conforme à une même spécification EMVco.

Selon d'autres caractéristiques ou étapes du procédé :
- La demande ou requête peut comprendre une information liée au compte bancaire du titulaire ou à une carte bancaire du titulaire ;
- L'information liée au compte bancaire ou carte bancaire du titulaire peut être une information tokenisée (token ID ou jeton ID) représentant le numéro de carte bancaire ;
- La demande ou requête peut comprendre une information de limitation du montant autorisé pour l'instrument de paiement et/ou une indication de l'unicité ou pluralité de l'usage de l'instrument de paiement ou et/ou information relatives à des commerçants autorisés ;
- Le procédé peut comprendre une étape d'authentification du titulaire sur l'application bancaire pour accéder à un service, application ou fonction de création dudit instrument de paiement au profit d'un bénéficiaire ;
- Le procédé peut comprendre une étape de transmission au tiers d'un code d'activation ou d'une invitation à retourner pour obtenir lesdites données d'enrôlement ;
- Ledit code d'activation peut comprendre un OTP à vérifier par le serveur bancaire pour communiquer les données d'enrôlement au tiers, en cas de succès de la vérification ;
- Le certificat d'authentification peut comprendre un OTP pour communiquer les données d'enrôlement au tiers bénéficiaire ;
- L'application bancaire du titulaire et/ou l'application du bénéficiaire peut comprendre ou constituer une application et/ou de portefeuille digital de tiers distinct de la banque et peut comprendre une carte bancaire digitale sous forme de token-ID A ;
- L'application bancaire du bénéficiaire peut comprendre ou constituer une application de portefeuille digital de tiers distinct de la banque et comprend une carte bancaire digitale sous forme de token-ID B.

L'invention a également pour objet, un système pour la création d'un instrument de paiement au profit d'un tiers bénéficiaire correspondant au procédé ci-dessus. Il peut se distinguer en ce que le token provisionné est associé au compte bancaire du titulaire, et utilisable par ledit bénéficiaire, distinct du titulaire, via ledit second dispositif de communication, distinct du premier dispositif de communication,
- et en ce que ladite requête de création de l'instrument de paiement comprend une communication d'au moins une adresse de contact dudit bénéficiaire.

Le système peut aussi avoir pour objet un serveur TR et/ ou TSP correspondant, ayant pour fonction de dé-tokeniser le token reçu, notamment suite ou lors d'une transaction de paiement, afin de retrouver ou associer un identifiant de la carte bancaire (physique et/ ou virtuelle) et/ou un compte bancaire du titulaire, sur lequel se fera l'opération de débit relatif aux transactions de paiement effectuées par le bénéficiaire.

Cette opération peut s'effectuer en coopération avec la banque (serveur de bancaire) du titulaire.

L'invention a également pour objet un instrument de paiement créé au profit d'un tiers bénéficiaire, ledit instrument étant mémorisé dans un second dispositif de communication du bénéficiaire et étant associé à un compte bancaire et/ou une carte bancaire physique ou virtuelle d'un titulaire de compte bancaire et/ou titulaire de carte bancaire physique ou virtuelle, digitale distinct du bénéficiaire.

### Descriptif des figures :

- La figure 1 illustre des étapes d'un procédé et un système de création d'un instrument de paiement, conformes à un mode préféré de mise en œuvre ou de réalisation l'invention ;

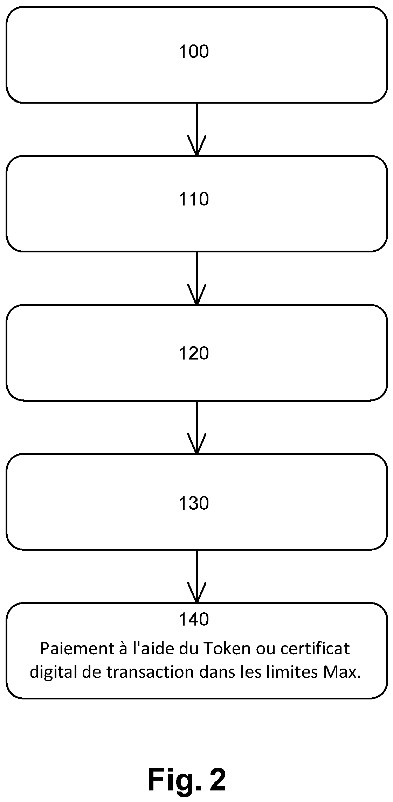

- La figure 2 illustre des étapes d'un exemple du procédé de l'invention.

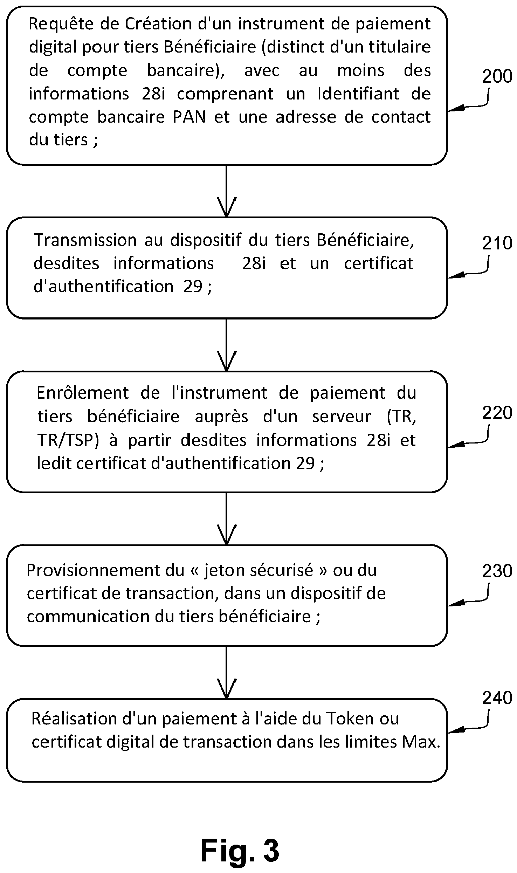

- La figure 3 illustre des étapes génériques du procédé de l'invention.
- La figure 4 illustre des étapes d'un procédé et un système de création d'un instrument de paiement, conformes à un mode supplémentaire de mise en œuvre ou de réalisation l'invention dans lequel on utilise des applications et un serveur 54 de fournisseur de portefeuille digital de tiers distinct de celui de la banque.

### Description.

D'une manière générale, des références identiques ou similaires d'une figure à l'autre représentent un élément identique ou similaire.

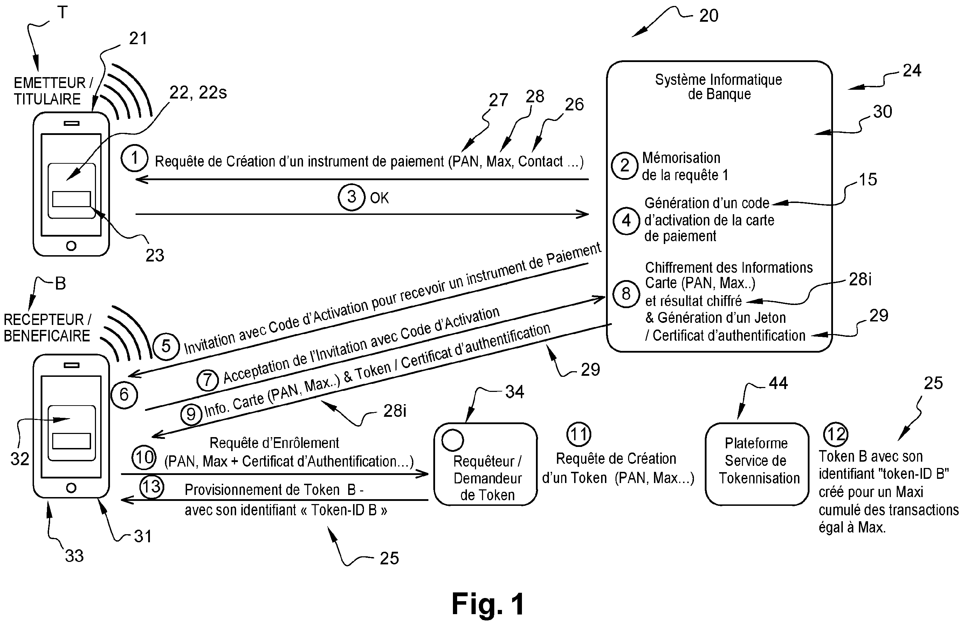

A la figure 1 est illustrée un exemple préféré du système (ou architecture matérielle) 20 de l'invention ainsi que des étapes préférées (1 à 13) d'un procédé conforme à l'invention faisant usage de ce système.

L'invention dans ce mode ou exemple préféré, met en œuvre deux types d'acteurs principaux :
- Une personne T (ou entité physique) appelée indifféremment par la suite, émetteur, demandeur, initiateur ou titulaire de compte bancaire (ce dernier pouvant être de préférence également titulaire d'une carte bancaire physique ou virtuelle) qui souhaite procurer un instrument de paiement sécurisé 25 (ou token B identifié par « token-ID B ») (avec des limites de don ou cadeau prédéfinies) à un tiers bénéficiaire B (quelqu'un ou une entité) personne physique appelée ci-après indifféremment par la suite receveur, bénéficiaire ou tiers bénéficiaire B;
- La personne B ou entité appelée receveur (ou tiers bénéficiaire B) est celle qui reçoit l'instrument (ou le moyen) de paiement (25, token B identifié par token-ID B) du demandeur T.

Sur la figure 1, le système 20 de l'invention comprend, du côté demandeur ou titulaire T, une application logicielle bancaire 22 (décrite ci-dessous) ; Cette application peut utiliser de préférence un kit de développement de logiciel (SDK, 23) ici dans l'exemple, pour application logicielle de téléphone mobile 21 (alternativement application logicielle 22 pour autre dispositif communicant intelligent).

L'application 22 peut être hébergée ou exécutée dans tout premier dispositif intelligent de communication 21 (ordinateur, tablette, objet à porter tel qu'une montre communicante...) du titulaire T, pouvant communiquer via des réseaux de télécommunication divers. En particulier, le premier dispositif 21 peut être configuré pour connecter et échanger, de préférence automatiquement (notamment lors d'une activation de requête 1 par un titulaire T), avec un serveur bancaire 24 et/ou équivalent (serveur TSP, TR, serveur de fournisseur de portefeuille électronique) décrit ultérieurement.

### - L'application logicielle bancaire 22.

Elle peut être, de préférence (mais aussi facultativement) configurée pour proposer les caractéristiques ou fonctions suivantes :
- une fonction d'authentification du demandeur (titulaire T), avant de transmettre une requête 1 de digitalisation de carte (ou de création d'un instrument de paiement digital 25, token B).

Cette authentification du demandeur T (facultative) peut être notamment effectuée sur son dispositif communicant 21, par exemple par code PIN, code secret ou empreinte biométrie pour accéder à une fonction de donation pécuniaire ou financière (cadeau, transfert de capacité financière à un tiers) via un instrument financier de paiement telle qu'une carte digitale et/ou token digital ou numérique de transaction.

Cette étape d'authentification peut être considérée comme une authentification ID&V efficace du demandeur auprès de sa banque (L'authentification ID&V peut être une méthode d'identification et de vérification auprès de la banque du titulaire ou d'un serveur intermédiaire d'un fournisseur de portefeuille digital lié ou distinct ou indépendant de la banque) et peut être réalisée grâce à une authentification forte basé sur au moins deux facteurs.

L'application 22 peut être procurée par un serveur de la banque du titulaire ou alternativement fournie par un fournisseur de portefeuille électronique (digital wallet provider en anglais). L'application 22 peut être configurée pour communiquer avec un serveur dédié d'interface de l'application 22, pour la fonction de création d'un instrument de paiement, serveur dédié procuré ou mis à disposition par ce fournisseur de portefeuille électronique (à la place du serveur de la banque). Le serveur dédié (non représenté sur cette figure 1) peut lui-même communiquer ou coopérer avec le serveur de la banque et /ou avec le serveur TSP, 44.

L'application bancaire 22 peut comprendre également une fonction HCE (Acronyme anglais de Host Card Emulation) de digitalisation / numérisation de carte (carte de l'initiateur) dans le dispositif 21 de l'initiateur et/ou 31 du tiers, et la carte émulée peut être utilisée comme instrument de paiement à l'intérieur d'un cadre (ou limitation) prédéfini par l'initiateur (tel que Montant maximum autorisé : Max, une limite des commerçants, sites marchands autorisés ou tout autre limitation).

L'application bancaire 22 peut être configurée pour établir et/ou effectuer une communication avec un serveur requêteur de token TR, 34 (ou de jeton sécurisé) et un serveur ou entité informatique 24 en arrière-plan de la Banque.

L'application bancaire 22 est capable de fournir un moyen 27 ou information à la banque (ou serveur) 24 pour identifier la carte à digitaliser.

Ce moyen 27 peut être tout élément ou toute information tokenisée ou pas, token-ID A, numéro de carte chiffrée ou non, identifiant du titulaire, numéro de compte bancaire chiffrée ou pas, IBAN, Swift code, permettant de lier une requête 1 du demandeur T à un compte bancaire ou à un numéro de carte bancaire PAN. On verra ultérieurement que d'autres informations 26 (adresse de contact), et le cas échéant des limitations 28, sont transmises pour la création de l'instrument de paiement 25, token B, au profit d'un tiers bénéficiaire B.

### - Le second dispositif 31 du tiers bénéficiaire B.

Il est distinct de celui du titulaire. Il peut comprendre tout ou partie des fonctions et/ou applications logicielles et/ou matérielles du premier dispositif 21. L'application bancaire 32 peut être identique ou similaire à l'application 22.

L'application 32 (comme 22) peut être une application d'un fournisseur de portefeuille électronique (contrôlé), fournie ou pas par la banque du titulaire T ou par un tiers comme Apple pay ^{™}, Google pay ^{™}, X...pay.

### - Serveur Bancaire 24.

Le système 20 comprend également un serveur bancaire 24 (ou une entité, système ou interface informatique pouvant être en arrière-plan de la Banque) qui propose les caractéristiques matérielles ou fonctions suivantes :
- Une fonction facultative mais préférée d'authentification de l'initiateur ou titulaire T notamment lors de la réception de la requête de création de l'instrument de paiement ou pour permettre l'utilisation de la fonction correspondante d'authentification dans le dispositif du titulaire T; (pour réaliser l'authentification ID&V)
- Le serveur bancaire 24 peut présenter une interface de programmation d'application (API) configurée pour être en mesure de recevoir et/ou traiter des requêtes 1 de l'initiateur (ou titulaire T du compte bancaire et/ou de carte digitalisée) afin de créer l'instrument de paiement 25, token B;

Le serveur bancaire peut être configuré pour pouvoir retrouver (ou associer) le compte bancaire du titulaire et/ou la carte physique ou digitalisée du titulaire T à partir d'une information 27, via un token A et/ou son identifiant token ID A (information sécurisée sous forme de token, insignifiante en dehors du système 20 et équivalente à ou permettant de retrouver une carte digitalisée). L'information 27 peut être toute information permettant de débiter ultérieurement le compte bancaire du titulaire T, comme par exemple un numéro de carte bancaire (PANs ou des tokens ID).

Ces requêtes 1 peuvent comprennent comme paramètre:
- Facultativement, un montant de paiement maximum autorisé 28, (le cas échéant, d'autres limitations qui peuvent comprendre également une limitation quant aux commerçants autorisés ou interdits)
- Une adresse de contact 26 (ou information permettant de retrouver une adresse de contact du bénéficiaire dans un serveur coopérant avec la banque, ou un numéro de téléphone, courriel) ; Il peut aussi y avoir une indication d'un canal de communication (WEB, nuage, réseau de téléphonie mobile...) pour contacter le bénéficiaire B,
- Une information de compte bancaire ou information de carte de paiement identifiée par un numéro de carte PAN (acronyme de Primacy account number en anglais) de l'initiateur, (cette carte pouvant être virtuelle ou physique), reliée au compte bancaire du titulaire, ou un identifiant de token (token-ID) relié à une carte de l'initiateur T (cette dernière pouvant être virtuelle ou physique).

L'entité informatique bancaire 24 peut être de préférence configurée pour générer un OTP (Numéro à usage unique, appelé aussi premier code d'authentification, ou bien code d'activation 15), et l'associer à une transaction relative à une requête 1 de création d'un instrument de paiement (ou token) 25 provenant de l'initiateur T. Le token 25 peut être aussi illustré sur les figures par son identifiant token-ID, B.

Le code d'activation 15 peut être toute information, code secret, chiffré ou pas permettant de faire un lien entre la réception de l'acceptation par le bénéficiaire et l'instrument de paiement à créer, tel que demandé par le titulaire de compte et de carte bancaire physique ou digitale virtuelle (sans carte physique associée). Ce code 15 peut être sous formé préféré un OTP.

Ce code 15 peut être créé (étape 4) à la réception de la requête 1 par le serveur de réception de requête 1 (ici serveur 24) et peut être envoyé (étape ou communication 5) au bénéficiaire à l'adresse de contact renseigné, notamment dans le cadre d'une invitation (étape ou communication 5) à accepter ledit instrument ou cadeau financier.

L'entité informatique bancaire (ou serveur) 24 peut être configurée pour générer 28i tous les paramètres requis pour initier une digitalisation de carte (PAN / Date d'expiration, cryptogramme...) . La génération 28i peut comprendre un chiffrement des informations 28 de carte à digitaliser / numériser.

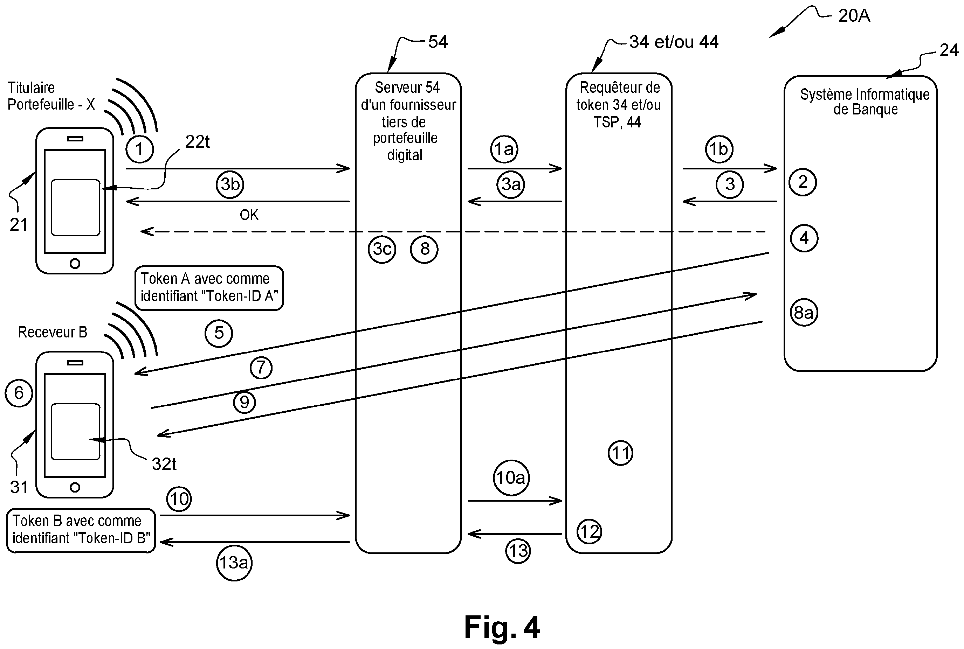

Dans le cas de l'utilisation d'un identifiant token-ID A, (provenant d'un fournisseur de portefeuille digital), pour identifier la carte digitale ou virtuelle de l'initiateur T, un serveur intermédiaire 54 (fig. 4) du fournisseur de portefeuille digital peut remplacer l'entité informatique bancaire 24.

Dès que le bénéficiaire B utilise l'invitation 5 pour créer un instrument de paiement 25, il peut demander à l'entité informatique bancaire 24 de recevoir les informations de la carte (27, 28) ou 28i.

L'entité informatique bancaire (ou serveur bancaire) 24 ou l'application de service 30 (au sein du serveur 24), peut authentifier la requête 7 d'acceptation grâce à l'OTP 29 (ou autre code d'activation 15, puis il peut (étape 8 fig.1) composer les informations de la carte, les chiffrer 28i et les transmettre (étape 9, fig. 1) à l'application bancaire 32 du bénéficiaire B dans son dispositif de communication 31.

L'entité informatique bancaire 24 ou l'application de service 30 peut être configurée pour enrôler de nouveaux utilisateurs ou des tiers bénéficiaires B. Pour ces derniers nouveaux utilisateurs ou tiers bénéficiaires B, l'entité informatique bancaire peut proposer un enrôlement plus léger (ou moins contraignant en terme de sécurité) que pour l'initiateur (Titulaire T);

L'application de service 30 peut être configurée pour communiquer avec l'application bancaire 32 dans le dispositif du bénéficiaire B;

### - Une plateforme de Tokenisation (TSP, 44).

Le système 20 peut mettre en œuvre, dans l'exemple, également une plateforme (TSP, 44) de génération de Token (Jeton digital, carte digitalisée).

La plateforme de tokenisation TSP, 44 peut recevoir une requête d'enrôlement 11 pour une nouvelle carte digitale. Cette requête d'enrôlement 11 peut provenir d'un serveur informatique (TR) requêteur de token, pouvant constituer une interface de la plateforme de tokenisation TSP, accessible par le dispositif 31, via une mise en œuvre de l'application 32.

La requête d'enrôlement 10 peut avoir été émise précédemment par l'application mobile 32 du récepteur ou bénéficiaire B en contenant les informations 27, 28, 28i de la carte de l'initiateur (ou titulaire T). La requête 29 peut comprendre de préférence un token 29 d'authentification.

Le token d'authentification 29 permet de faire le lien entre la banque et les serveurs TR/TSP (34, 44 ou 54) qui peuvent être indépendants de la banque.

Un mécanisme ou système sécurisé par exemple PKI (Public Key infrastructure en anglais) peut être établi entre le serveur de la banque 24 et ces serveurs 34 et/ou 44 et/ou 54. Un secret partagé ou une clé publique / privée peut être mise en place ou entre le serveur 24 et les serveurs 34, 44 et/ou 54.

Ce système d'échange sécurisé permet au serveur TR, 34 et/ou serveur 44 ou 54 de vérifier l'authenticité des informations, notamment vérifier le certificat ou token d'authentification 29 associé à la demande d'enrôlement (ou de création d'un registre ou tableau de correspondance dans le serveur 34 et/ou 44 et/ou 54). Ce certificat peut être émis par la banque comme autorité de confiance ou utilisé par la banque mais provenant d'une autorité autre.

L'émetteur de carte physique (ou virtuelle du titulaire) (Banque et/ou fournisseur de portefeuille digital (digital wallet), peut, une fois que le token (B, 25) (instrument de paiement) pour le bénéficiaire a été délivré avec des limitations, vérifier que les demandes de paiement initiés avec ce token B, respecte les règles d'usage imposées du token, (B, 25) notamment que le total des paiements n'excède pas le montant limite initial Max de la carte cadeau.

Une alternative peut être une synchronisation entre la banque et le système 20 (hors banque) par exemple le serveur TSP, 44 pour une mise à jour du montant utilisé pour ce token-ID B, 25 délégué carte cadeau. Le serveur TSP peut être capable de vérifier seul ou en coopération avec la banque, les limitations imposées du titulaire T.

### - Un requêteur de jeton (carte digitale) TR, 34 associé au serveur TSP, 44.

Dans une variante de mise en œuvre de l'invention ou de réalisation du système 20, ce requêteur TR, 34 peut être compris, constituer ou faire partie du serveur bancaire 24; Ce qui peut simplifier ou réduire le nombre d'intervenants ou d'entités ou infrastructure. Il peut faire partie du ou être associer au serveur TSP.

Le serveur (ou requêteur de token) TR, 34 peut traiter ou transférer, (ici dans l'exemple, au serveur TSP, 44), la requête d'enrôlement 11 de la nouvelle carte, reçue (via la communication 10) de l'application mobile 32 et contenant l'information de carte 27, 28 de l'initiateur T ainsi qu'un jeton d'authentification 29, créé initialement par le serveur bancaire 24, attestant de l'authenticité de la requête de digitalisation et/ou enrôlement associé 10, 11.

La requête d'enrôlement (ou de création d'un compte ou d'un registre dans une table numérique de correspondance auprès des serveurs TR et /ou TSP (ou serveur 54) pour le bénéficiaire) 10 peut comprendre les informations 27, 28 indiquées de la carte, en plus de toute information habituellement requise connu de l'homme de l'art, pour provisionner correctement un token dans un dispositif de communication, telles que par exemple des capacités techniques ou caractéristiques du dispositif.

Une fois l'enrôlement effectué, la requête ou instruction 11 de création de token B peut être envoyée au serveur de tokenisation TSP, 44.

La plateforme de tokenisation TSP ou la banque émettrice peut être chargées l'une ou l'autre ou bien les deux ensemble en coopération, de vérifier les règles d'usage définies avec la référence 28. Elle peut par être par exemple consolider les montants utilisés par la carte digitale B, 25 (identifiée par Token-ID B), reçue par le destinataire et donc vérifier que les limites ne soient pas atteintes lors d'une autorisation de paiement sollicitée avec l'identifiant « token-ID B » du token B.

Un exemple concret de mise en œuvre des étapes de l'invention et d'utilisation du système est présenté ci-après.

Un initiateur (père T) veut donner (ou transférer des capacités de paiement) à son enfant (récepteur bénéficiaire B) pour lui permettre de les utiliser notamment dans des transactions de paiement. Il veut notamment donner un moyen de paiement avec des limitations. Il peut grâce à l'invention donner un accès contrôlé à son propre moyen de paiement (carte).

Sans vraiment déplacer des fonds, de l'argent, les exemples permettent pour le moins de donner un droit d'utiliser au moins une partie (voire la totalité) des fonds du compte bancaire du titulaire 1, tout en contrôlant ce droit, grâce à un moyen de paiement token B, 25 (avec comme identifiant « token-ID B ».

Grâce à l'invention, le titulaire T a la possibilité d'utiliser sa carte bancaire (physique ou virtuelle) avec le numéro d'identification bancaire (PAN), 27 et avec quelques restrictions 28 sur le montant global disponible (un montant maximal autorisé établi) conformément aux étapes 100 à 150 suivantes :
- A l'étape 100, l'initiateur T s'authentifie sur l'application bancaire 22 de son téléphone mobile 21, (notamment via une authentification forte, se basant sur quelque chose qu'il possède, quelque chose qu'il connait comme un code secret, mot de passe et/ou quelque chose qu'il le caractérise comme son empreinte biométrique) ; puis,
- A l'étape 110, il prépare une requête, avec son application logicielle bancaire 22, qui est transmise au serveur de sa banque 24 avec une instruction (requête 1) pour envoyer à son enfant B, une carte cadeau digitale 25, 28i liée directement à sa carte bancaire ou numéro de carte PAN, 27 (puis lié à son compte bancaire). Il envoie la requête 1 au serveur bancaire 24 avec un moyen de contact 26 pour contacter son enfant (ex. courriel, numéro de téléphone, adresse de contact quelconque...) ;

- A l'étape 120, le serveur bancaire 24 reçoit la requête 1, débute avec l'application de service 30, la création de la carte cadeau (token 25, information de carte 28i) et échange avec l'application bancaire 32 de l'enfant (bénéficiaire B) en lui transmettant une invitation 5, 7, 9;
- A l'étape 130, l'enfant B reçoit et traite 6 l'invitation 5 à recevoir un instrument de paiement de la banque 24 et débute à l'aide de son mobile 31, une demande (étapes 7) de digitalisation de la carte du père PAN, 27 avec des restrictions associées 28.

La banque (serveur bancaire) 24, via l'application de service 30, procure au bénéficiaire B toutes les informations cartes 28i (de préférence avec un token d'authentification 29) requises pour valider et créer un jeton 25 permettant de digitaliser la carte associée (27bis non illustrée associée à un identifiant de compte bancaire et/ou de carte bancaire 27);
- A l'étape 140, l'application logicielle bancaire du dispositif 31 de l'enfant 32 échange avec le requêteur de jeton TR, 34 afin de créer le jeton grâce à toutes les informations de la carte et données d'authentification reçues du serveur bancaire ;
- A l'étape 150, l'application logicielle bancaire 32 de l'enfant (bénéficiaire B) reçoit 13 le jeton 25 (Token B avec son identifiant "token-ID B". Ce qui lui permet de pouvoir utiliser la carte digitale pour payer conformément aux restrictions 28 contenues dans le jeton 25 (Montant maximum autorisé 28).

Lorsque l'enfant veut réaliser un paiement, il peut utiliser le jeton 25 comme un token de paiement classique, il lance l'application de la banque 22, choisit son moyen de paiement, il peut présenter ses données biométriques pour débloquer l'accès au jeton 25 pour un paiement. Cela peut créer une génération d'un cryptogramme qui sera utilisé pour le paiement.

La banque émettrice de la carte et la plateforme TSP peuvent se synchroniser pour vérifier que le montant maximum autorisé 28 ne soit pas dépassé par le cumul des paiements faits avec le token 25 par l'enfant.

L'invention présente les avantages ci-après :
- Pour le cas d'usage carte cadeau, le titulaire est certain qu'aucun argent ne sera perdu si elle n'est pas utilisée. Le compte du titulaire n'est pas débité sans utilisation;
- L'invention assure la capacité d'envoyer un moyen de paiement à quiconque possède un téléphone portable, ou autre dispositif communicant partout et instantanément.

L'invention permet un nouveau procédé impliquant un titulaire, un receveur et deux dispositifs communicants avec une délégation de capacité de paiement sécurisée et étant approuvée par toutes les parties impliquées (Titulaire, bénéficiaire, ...) en incluant des règles d'utilisation.

Un second exemple générique de mise en œuvre des étapes minimales de l'invention et d'utilisation du système 20 peut être le suivant (étapes 200- 240):
- A l'étape 200, le procédé comporte l'émission d'une requête de création d'un instrument de paiement digital 25 pour tiers bénéficiaire B (distinct d'un titulaire de compte bancaire T), avec au moins des informations 28i comprenant au moins un identifiant de carte bancaire physique ou virtuelle (PAN, token-ID) ou toute information liée à ce compte et une adresse de contact du tiers ;
   L'émission de la requête (ou instruction) peut s'effectuer à l'aide ou via le dispositif 21 communicant du titulaire comprenant une application logicielle dédiée 22 et pouvant échanger avec un serveur bancaire 24 de la banque du titulaire T accessible en ligne (ou alternativement un serveur interface de l'application, de préférence contrôlé par la banque et/ou un fournisseur de l'application 22 et/ou 32 ou fournisseur de portefeuilles digitaux);
- A l'étape 210, le procédé comprend une transmission (identique à l'étape ou communication 9, fig. 1) au dispositif 21 du tiers bénéficiaire, d'informations 28i (PAN, ou Token-ID, limites d'utilisation...) et un certificat d'authentification 29 du serveur bancaire 24 associé à ces informations ou à cette transmission 9;
- A l'étape 220, selon le procédé de cet exemple générique (ou simplifié), un enrôlement de l'instrument de paiement 25 du tiers bénéficiaire est effectué auprès d'un serveur configuré à cet effet (TR, 34 ; TR/TSP, 44, voire compris dans la banque 24) à partir desdites informations 28i et ledit certificat d'authentification 29 ;
- A l'étape 230, le procédé effectue un provisionnement du jeton sécurisé 25 associé à l'instrument de paiement, dans le dispositif 31 de communication du tiers bénéficiaire B;
- A l'étape 240, le bénéficiaire B peut réaliser un paiement à l'aide du token 25 digital de transaction (et/ou instrument de paiement) dans les limites Max prédéfinies par le titulaire T (cette limite pouvant être cumulative ou à usage unique suivant les critères définies).

Ainsi, les phases d'authentification sur le dispositif du titulaire, la phase d'invitation 5, les phases 6 de réception et 7 d'acceptation peuvent être facultatives.

Le transfert 5 de l'invitation est toutefois préférable et peut être fait sous une autre forme ... (QR Code, ...)

De même, si le serveur bancaire 24 peut offrir lui-même un service des serveurs TR et/ou TSP : les étapes 10-13 peuvent être effectuées entre le dispositif 31 du bénéficiaire B et le serveur bancaire 24.

Des différences ou avantages ci-dessous de l'invention par rapport à l'art antérieur notamment US10380596 (B1) en introduction, peuvent être précisées ci-après.

L'invention propose une solution moins orientée banque au sens où la solution proposée n'est pas spécifique à la banque. Grâce à l'invention, la banque peut gérer elle-même la tokenisation de manière autonome. Et, d'un point de vue des spécifications EMVco, c'est totalement transparent. Elle peut recevoir les requêtes 1 de création d'instrument de paiement, les contrôler en les traitant et faire finaliser la création de token B avec des serveurs TSP et/ou TR. L'utilisation des tokens et détokenisation et interactions éventuelles requises avec la banque peut s'effectuer également avec les serveurs TSP et/ou TR moins sous le contrôle complet de la banque.

L'invention repose sur un écosystème définit par EMVCo concernant la tokenization. La gestion du token peut être, de préférence, effectuée par un serveur TSP (Token Service Provider en anglais) dans un cadre régi et maintenu par les spécifications EMVco et non les banques.

Donc, l'invention peut s'appliquer de-facto à plusieurs banques qui adopteraient la solution de l'invention tout en étant conforme à une même spécification EMVco.

Facultativement en variante (non illustrée), l'invention peut présenter l'avantage d'informer le titulaire de carte en temps réel lors de la tokenization de la carte. A cet effet, l'invention peut prévoir une solution avec les étapes ci-dessous :
- Le titulaire fait une demande de création de carte cadeau tokenisée 25 pour un bénéficiaire B en précisant les informations de contact du bénéficiaire (mail ou numéro de téléphone);
- Le destinataire / bénéficiaire B accepte la « carte cadeau »
- La solution démarre la tokenisation sur le dispositif du bénéficiaire, (Token 25 créé et provisionné sur le dispositif du bénéficiaire mais non activé (utilisation pour paiement pas possible);
- En parallèle (étape C non illustrée), le procédé (ou solution) peut informer le titulaire T (directement entre dispositifs ou via le serveur de la banque) que le bénéficiaire B a accepté l'offre de carte cadeau ; Le procédé peut prévoir une demande de confirmation donnée par le titulaire (pouvant inclure un mécanisme d'authentification ID&V) pour finaliser la demande de création de carte cadeau); Une fois la demande de création confirmée, le token 25 du bénéficiaire peut être activé dans le système 20.

Les étapes d'authentification ID&V peuvent être exécutées par la banque avant l'étape 1 par une authentification forte ou notamment à l'étape 8 pour ID et la confirmation.

L'authentification ID&V permet notamment à la banque de vérifier que l'émetteur T de la requête 1 est bien le propriétaire T du compte ou de la carte bancaire et qu'il bien est habilité à effectuer la requête 1 de création de l'instrument de paiement.

Cette dernière étape C, a l'avantage de rajouter de la sécurité, le titulaire peut vérifier qu'on s'adresse au bon bénéficiaire.

L'étape C peut comprendre alternativement ou cumulativement, un échange entre le bénéficiaire et l'émetteur à travers un canal dédié (SMS, email, compte de réseau sociaux, MSN, WhatsApp...), pour permettre à l'émetteur T de vérifier que le bénéficiaire est la bonne personne.

A la figure 4 est illustré un mode de réalisation d'un système 20A dans lequel l'application bancaire 22 et/ou 32 comprend ou constitue une application de portefeuille digital de tiers distinct de la banque (tel que Apple pay^{™} ou Samsung pay^{™}. L'application 22 (ou 32) comprend une carte bancaire digitale sous forme de token-ID ;

Le serveur de la banque 24, peut être remplacé par un serveur d'un fournisseur de portefeuille digital distinct de celui de la banque. Il peut être contrôlé par une entité tierce distincte de la banque.

Ce modèle proposé peut comprendre au moins deux parties principales selon un schéma serveur TR/TSP / banque émettrice de la carte bancaire (TR/TSP pouvant comprendre ou constituer ou non, une seule et même entité ou serveur informatique. Ce schéma peut être adapté pour comprendre un troisième acteur constitué par un fournisseur de portefeuille digital (tel Apple-pay^{™} ou Samsung-pay^{™}).

Ce système 20A fonctionne comme ci-après.
- Le titulaire T comprend dans on dispositif 21 une application 22t de fournisseur d'application digitale ou de portefeuille digital de tiers avec un numéro de carte bancaire tokenisé (token A identifié par son identifiant : token-ID A).
- Le procédé comprend l'étape 1 de demande de création d'instrument de paiement qui est identique ou similaire à celle de la figure 1. Ici l'identifiant de compte ou carte bancaire du titulaire T est un token ID - A (token qui a été créé au préalable par le Titulaire T sur son dispositif 21 et qui est identifié par l'identifiant « token-ID A ») représentant le numéro de carte bancaire d'une carte bancaire physique ou virtuelle sous forme de token.
   Cependant cette requête ou demande 1 de création d'un instrument de paiement digital parvient à un serveur 54 interface d'un fournisseur de portefeuille digital d'une entité tierce (distincte ou indépendante de la banque 24) . Le serveur s'interface entre le serveur de la banque et l'application 22t ou le dispositif du titulaire
- Puis à l'étape la, la requête 1 est transmise (la) au serveur TR et/ou TSP identique ou similaire à celui de la figure 1. Le serveur d'entité tierce 54 doit aiguiller la demande 1 vers le bon serveur TSP associé au serveur 54 (indication dans la requête 1). Le serveur 54 peut stocker des informations sur les limitations de paiement, assurer des consolidations de paiement (cumul de paiement) et des vérifications d'autres limitations telles que (liste de marchands autorisés).

Enfin, ce le serveur 34, 44 (TR et/ou TSP) transmet à son tour la requête 1 au serveur 24 de la banque.
- A l'étape 2, le serveur de banque mémorise la requête 1.
- A L'étape 3a puis 3b, le serveur de banque 24 peut retourner un accusé réception approbatif (OK) ou exige une authentification ID&V du titulaire. Ce message est transmis 3b à l'application 22t via le serveur TR et/ou TSP.
- A l'étape 3C et 8, le titulaire peut confirmer sa demande initiale 1 et effectuer une authentification ID&V optionnel de préférence directement avec le serveur de banque.
- Les étapes 4-7,8a sont identiques ou similaires à celles 4-7, 8a de la figure 1. Toutefois, les étapes 5, 7 ou 9 peuvent être exécutées au nom de la banque par le serveur 54 de l'entité tierce fournisseur de portefeuille digital.
- L'étape de demande d'enrôlement 10 peut s'effectuer à l'inverse de la figure 1 via le serveur 54 de l'entité tierce qui le transmet 10a au serveur auprès du serveur TR et /ou TSP 34, 44 ; - L'étape de provisionnement 13 du token B, identifié par son identifiant « token-ID B » dans le dispositif du bénéficiaire B peut s'effectuer via la communication 13a depuis le serveur 54 de l'entité tierce.

Ainsi, dans cet exemple, l'application bancaire 22 du titulaire et/ou l'application 32 du bénéficiaire peut comprendre ou constituer une application 22t et/ou 32t de portefeuille digital de tiers distinct de la banque et l'application 22t peut comprendre une carte bancaire digitale sous forme de token identifié par son identifiant « token-ID A » ou simplement « ID A ».

De même, l'application bancaire 32 du bénéficiaire B peut comprendre ou constituer une application 32t de portefeuille digital de tiers distinct de la banque et comprendre une carte bancaire digitale, sous forme de token identifié par son identifiant token-ID B provisionné en étape 13a.

Ainsi le système comprend dans le dispositif du bénéficiaire un token identifié par son identifiant token-ID (B) ou « ID B », associé au compte bancaire ou carte bancaire physique ou virtuelle du titulaire T.

De même, un serveur TSP ou serveur de fournisseur de portefeuille digital et/ou de carte digitale peut comprendre une table de correspondance électronique ou équivalant, associant des tokens-ID B d'un ensemble de bénéficiaires à un ensemble de titulaires T.

Lors d'opération de dé-tokenisation de ces tokens dans des serveurs 44, ces tokens issus ou utilisés via des dispositifs de bénéficiaires, par exemple sur des terminaux de paiement POS, sont traités dans ces serveurs dédiés, en relation avec des titulaires de compte bancaire ou de carte physique ou virtuelle (chaque carte physique ou virtuelle étant reliée ou associée à une carte digitale), distincts des bénéficiaires utilisateurs pour des transactions de paiement. Ces bénéficiaires peuvent d'ailleurs ne pas avoir de compte bancaire courant.

Ainsi, l'invention permet d'obtenir dans chaque exemple ou mode décrit précédemment, un instrument de paiement 25, Token, token identifié par son identifiant « ID B » ou « token-ID B », créé au profit d'un tiers bénéficiaire (B). Cet instrument (25, token B) est mémorisé dans un second dispositif de de communication 31 du bénéficiaire B et étant associé à un compte bancaire et/ou une carte bancaire physique ou virtuelle d'un titulaire de compte bancaire et/ou titulaire de carte bancaire physique ou virtuelle, digitale distinct du bénéficiaire.

En utilisation, au cours d'un paiement par exemple sans contact sur un terminal POS ou simplement en sélectionnant dans l'application 32, l'instrument de paiement 25, token B, le dispositif 31 du bénéficiaire comprend ou peut afficher une carte bancaire sur l'écran du dispositif (par exemple un téléphone mobile), une représentation graphique de carte bancaire de la banque du titulaire. La représentation affichée peut comprendre le nom du titulaire. Cette dernière peut le cas échéant être précédé d'une mention « par délégation (ou équivalent) du « nom » du titulaire). La représentation graphique peut également comprendre des indications totale ou partielle du numéro PAN et/ou de la date limite de la carte; Au verso peut se trouver un nombre (cryptogramme). Cette carte bancaire est associée à un compte bancaire du titulaire. Cette carte bancaire représentée n'est en aucun cas une carte bancaire appartenant au bénéficiaire ou utilisateur du dispositif, qui peut ne pas en avoir du tout.

Le cas échéant, l'application peut afficher des limitations, ou un cumul des paiements ou un solde du cadeau pécunier. L'application peut permettre un affichage des paramètres d'utilisation de la carte cadeau comme par exemple, les commerçants autorisés, une période de validité, une zone géographique d'utilisation.

Ainsi, le bénéficiaire est informé très facilement des attributs associés à la carte cadeau et peut facilement consulter et savoir où il en est dans le solde ou crédit de paiement.

Ces limitations peuvent avoir été provisionnées en même temps que le token B. Un fichier électronique comprenant des attributs de la carte, et/ou limitations peut avoir été ajouté au token B au cours de sa création (12) et dans la communication 13, puis à réception dans le dispositif ces attributs et/ou limitations peuvent être extraits ou interprétés par l'application 32 pour les rendre accessibles ou lisibles par le bénéficiaire sur son dispositif.

En cas de détection par le dispositif d'un POS de marchand non autorisé, une alerte et avertissement peut être émise directement par l'application ou par un des serveurs 34, 44, 54.

Le second dispositif 31 peut posséder un identifiant (par exemple IMEI et/ou un numéro de téléphone distinct de celui du titulaire). L'adresse de contact du bénéficiaire (courriel, numéro de téléphone...) mémorisé dans le système 20, 20A est distincte de celle du titulaire du compte à débiter ou de carte bancaire utilisée.

Le provisionnement du token B par un serveur de provisionnement 44 peut être effectué notamment via tout canal de communication notamment le réseau de téléphonie mobile via OTA, par le réseau internet, ou autre réseau.

Les données de contact du bénéficiaire (ou du dispositif 31) pour le provisionnement ont pu être transmises par le dispositif 31, notamment par l'application 32 automatiquement, au moins en partie au cours de l'étape d'enrôlement 10 de chaque exemple décrit précédemment.

## Revendications

1. Procédé pour la création d'un instrument de paiement au profit d'un tiers bénéficiaire, ledit procédé comprenant les étapes suivantes :
- demande (1) de création d'un instrument de paiement digital (25) auprès d'un serveur bancaire (24) d'un titulaire (T) de compte bancaire (PAN, 27) ou de carte bancaire, à l'aide d'une première application bancaire (22) d'un dispositif de communication (21) du titulaire (T),
- transmission (5) à un dispositif de communication (31) du bénéficiaire (B) comprenant une seconde application bancaire (32), par ledit serveur bancaire (24), de données (28) d'enrôlement, lesdites données d'enrôlement comprenant un identifiant de ladite carte bancaire (PAN, 27) et un certificat d'authentification (29) des données d'enrôlement;
- enrôlement du bénéficiaire (B) auprès d'un serveur d'enrôlement et/ou serveur de jeton (TR, TR/TSP, 34) en communicant lesdites données d'enrôlement à l'aide d'un second dispositif de communication (31), ledit serveur d'enrôlement et/ou serveur de jeton (TR, TR/TSP) étant configuré pour générer à partir desdites données d'enrôlement, un jeton sécurisé de transaction (25) ou le requérir auprès d'un serveur (TR, 44) de jeton sécurisé ;
- provisionnement du jeton sécurisé (25), dans ledit second dispositif de communication du bénéficiaire,
**caractérisé en ce que** le bénéficiaire (B) est un tiers distinct du titulaire (T) de compte avec un second dispositif de communication (31) distinct de celui (21) du titulaire de compte, et **en ce que** ladite requête (1) de création de l'instrument de paiement (25) comprend une communication d'au moins une adresse (26) de contact dudit bénéficiaire (B).

2. Procédé selon la revendication précédente, **caractérisé en ce que** la demande (1) comprend une information (PAN) liée au compte bancaire du titulaire ou à une carte bancaire du titulaire physique ou virtuelle ou un token identifié par token ID A.

3. Procédé selon la revendication précédente, **caractérisé en ce que** l'information liée au compte bancaire ou carte bancaire du titulaire est une information tokenisée (token-ID A) représentant le numéro de carte bancaire PAN.

4. Procédé selon l'une des revendications précédentes, **caractérisé en ce que** la demande (1) comprend une information de limitation du montant autorisé pour l'instrument de paiement et/ou indication de l'unicité ou pluralité de l'usage de l'instrument de paiement ou et/ou information de commerçants autorisés.

5. Procédé selon l'une des revendications précédentes, **caractérisé en ce qu'**il comprend une étape d'authentification du titulaire sur l'application bancaire (22) pour accéder à un service, application ou fonction de création dudit instrument de paiement (25) au profit d'un bénéficiaire B.

6. Procédé selon l'une des revendications précédentes, **caractérisé en ce qu'**il comprend une étape de transmission (5) au tiers d'un code d'activation (15) ou d'une invitation (14) à retourner pour obtenir lesdites données d'enrôlement (28) .

7. Procédé selon l'une des revendications précédentes, **caractérisé en ce que** ledit code d'activation (15) comprend un OTP à vérifier par le serveur bancaire pour communiquer les données d'enrôlement (28) au tiers, en cas de succès de la vérification.

8. Procédé selon l'une quelconque des revendications précédentes, **caractérisé en ce que** ledit certificat d'authentification (29) comprend un OTP pour communiquer les données d'enrôlement au tiers bénéficiaire.

9. Procédé selon l'une quelconque des revendications précédentes, caractérisé en ce l'application bancaire 22 du titulaire et/ou l'application (32) du bénéficiaire comprend ou constitue une application 22t et/ou 32t de portefeuille digital de tiers distinct de la banque et comprend une carte bancaire digitale sous forme de token identifié par token-ID A, ledit token-ID (A) étant associé au compte bancaire du titulaire T.

10. Procédé selon l'une quelconque des revendications précédentes, caractérisé en ce l'application bancaire (32) du bénéficiaire comprend ou constitue une application (32t) de portefeuille digital de tiers distinct de la banque et comprend une carte bancaire digitale sous forme de token (B identifié par token-ID (B), ledit token-ID (B) étant associé au compte bancaire ou carte digitale du titulaire T.

11. Système pour la création d'un instrument de paiement au profit d'un tiers bénéficiaire, ledit système étant configuré pour:
- demander (1) une création d'un instrument de paiement digital (25) auprès d'un serveur bancaire (24) d'un titulaire (T) de compte bancaire (PAN, 27) ou de carte bancaire, à l'aide d'une première application bancaire (22) d'un dispositif de communication (21) du titulaire (T),
- transmettre (5) à un dispositif de communication (31) du bénéficiaire (B) comprenant une seconde application bancaire (32), par ledit serveur bancaire (24), de données (28) d'enrôlement, lesdites données d'enrôlement comprenant un identifiant de ladite carte bancaire (PAN, 27) et un certificat d'authentification (29) des données d'enrôlement;
- enrôler ledit bénéficiaire (B) auprès d'un serveur d'enrôlement et/ou serveur de jeton (TR, TR/TSP, 34) en communicant lesdites données d'enrôlement à l'aide d'un second dispositif de communication (31), ledit serveur d'enrôlement et/ou serveur de jeton (TR, TR/TSP) étant configuré(s) pour générer à partir desdites données d'enrôlement, un jeton sécurisé de transaction (25) ou le requérir auprès d'un serveur (TR, 44) de jeton sécurisé ;
- provisionner du jeton sécurisé (25), dans ledit second dispositif de communication du bénéficiaire,
**caractérisé en ce que** ledit token (25) est associé au compte bancaire du titulaire (T), et utilisable par ledit bénéficiaire, distinct du titulaire (T), via ledit second dispositif de communication (31), distinct du premier dispositif de communication (21),
- et **en ce que** ladite requête (1) de création de l'instrument de paiement (25) comprend une communication d'au moins une adresse (26) de contact dudit bénéficiaire (B) .

12. Instrument de paiement créé au profit d'un tiers bénéficiaire (B), ledit instrument (25, token B) étant mémorisé dans un second dispositif de communication (31) du bénéficiaire (B) et étant associé à un compte bancaire et/ou une carte bancaire physique (PAN) ou virtuelle d'un titulaire (T) de compte bancaire et/ou titulaire (T) de carte bancaire physique ou virtuelle, digitale distinct du bénéficiaire (B).
